# FASCICULE DE BREVET EUROPEEN

(11) **EP 0 865 142 B1**
(45) Date de publication et mention de la délivrance du brevet: **21.05.2008**
(21) Numéro de dépôt: 98400196.6
(22) Date de dépôt: 30.01.1998
(51) Int. Cl.: H02J 7/14, H02J 7/34

(54) **Dispositif d'alimentation électrique avec batterie d'accumulateurs et supercondensateur**
Elektrische Versorgungseinrichtung mit Sekundärbatterie und Superkondensator
Electric power supply device with secondary battery and supercapacitor

(30) Priorité: 13.03.1997 FR 9703019
(43) Date de publication de la demande: 16.09.1998
(73) Titulaire: RENAULT S.A.S., 92100 Boulogne Billancourt (FR)
(72) Inventeur: Cartier, Stéphane, 78160 Marly (FR); Hiron, Christian, 75014 Paris (FR); Duval, Hervé, 78400 Chatou (FR)

(56) Documents cités:
- EP-A- 0 376 667
- EP-A- 0 533 037
- PATENT ABSTRACTS OF JAPAN vol. 095, no. 011, 26 décembre 1995 & JP 07 231511 A (AISIN SEIKI CO LTD), 29 août 1995,

## Description

L'invention concerne un dispositif pour alimenter en énergie électrique les organes d'un véhicule à l'aide d'une batterie d'accumulateurs et d'un supercondensateur.

Pour faire fonctionner un moteur thermique d'un véhicule, il est nécessaire de disposer d'une source d'énergie électrique qui est constituée habituellement d'une batterie d'accumulateurs associée à un dispositif de charge tel qu'un alternateur entraîné par le moteur thermique.

L'énergie électrique de la batterie d'accumulateurs est consommée principalement pour la mise en route du moteur thermique par l'intermédiaire du démarreur, pour le chauffage de certains organes du véhicule tels que le circuit de refroidissement par l'intermédiaire de thermoplongeurs et le pot catalytique ou encore, à tout moment, d'autres organes dits de confort tels que le pare-brise chauffant, la lunette arrière chauffante, les sièges chauffants, l'air de l'habitacle, etc... .

L'alimentation électrique simultanée de tous ces organes ou de certains d'entre eux au moment du démarrage du moteur et du roulage après démarrage, conduit à une diminution substantielle de la tension de sortie de la batterie d'accumulateurs. Ceci est préjudiciable au bon fonctionnement du moteur et des calculateurs qui en ont la gestion. En outre, afin de respecter les futures normes anti-pollution, il est essentiel que le pot catalytique atteigne rapidement sa température normale de fonctionnement, ce qui implique de disposer d'une puissance électrique élevée après le démarrage.

Pour remédier à ce problème, il a été proposé dans le brevet européen EP-A-0 533 037 d'utiliser un supercondensateur comme source complémentaire de puissance pour alimenter les résistances chauffantes du pot catalytique, du pare-brise, de la lunette arrière, etc....

Dans le montage décrit dans ce brevet européen, le supercondensateur est connecté de façon permanente à la batterie via une résistance et une diode. Il est donc nécessaire d'utiliser un supercondensateur ayant des pertes en charge faibles car les courants de fuite déchargeraient la batterie lors d'un arrêt prolongé du véhicule.

Par ailleurs, la batterie participe via la diode avec le supercondensateur à l'alimentation des organes chauffants de sorte que si l'alternateur n'arrive plus à fournir assez de courant pour alimenter les autres charges du véhicule, la tension du réseau électrique de bord risque de diminuer encore plus fortement, notamment si le supercondensateur est insuffisamment chargé.

Un but de la présente invention est donc de réaliser un dispositif d'alimentation électrique avec batterie d'accumulateurs et supercondensateurs qui ne présente pas les inconvénients du dispositif de l'art intérieur décrit succinctement ci-dessus.

Le but de la présente invention est atteint en alimentant en puissance tout ou partie des résistances de chauffage par la décharge du supercondensateur seul et en chargeant le supercondensateur par la batterie via tout ou partie des résistances de chauffage, les commutations entre la décharge et la charge du supercondensateur étant obtenues par un commutateur commandé par un circuit logique en fonction de certains paramètres.

L'invention concerne donc un dispositif d'alimentation électrique d'un véhicule automobile comprenant:
- une batterie d'accumulateurs,
- des moyens pour charger ladite batterie d'accumulateurs,
- des résistances de chauffage,
- un dispositif de commande manuelle du type serrure pour clé de contact, et
- un supercondensateur,
caractérisé en ce que :
- une borne dudit supercondensateur est connectée à une borne d'au moins une résistance de chauffage,
- un commutateur, à au moins deux positions, connecte l'autre borne dudit supercondensateur soit à la batterie d'accumulateurs, soit à l'autre borne de la résistance de chauffage, et
- un circuit logique commande la position dudit commutateur en fonction de la position du dispositif de commande manuelle et des valeurs mesurées de certains paramètres dudit dispositif d'alimentation électrique.

Dans une forme de réalisation, le commutateur comprend, en plus des deux premières positions, une troisième position dans laquelle le supercondensateur n'est connecté à aucun élément du dispositif.

L'invention sera mieux comprise à l'aide de la description suivante d'exemples particuliers de réalisation, ladite description étant faite en relation avec le dessin joint dans lequel :
- la figure unique est un schéma électrique incorporant un dispositif d'alimentation électrique selon l'invention.

De manière schématique, un dispositif d'alimentation électrique d'un véhicule à moteur thermique comprend principalement une batterie d'accumulateurs 10 qui est rechargée par un alternateur 12 entraîné par le moteur thermique (non représenté). La batterie 10 alimente un démarreur 14 et différentes charges 16 telles que des résistances chauffantes de pare-brise chauffant, de lunette arrière chauffante, des feux, etc. Ces différents éléments 12, 14 et 16 sont connectés en parallèle entre la borne positive de la batterie 10 et sa borne négative qui est connectée au potentiel de masse.

Les interrupteurs 32, 34 et 36 indiquent respectivement que l'alternateur 12 peut être à l'arrêt ou en marche, que le démarreur 14 est activé ou non et que l'une ou l'autre des charges 16 est alimentée ou non.

Selon l'invention, un supercondensateur 18 est connecté en série avec au moins une des charges 16 dont la valeur de la résistance est Rc, cette résistance portant la référence 20. Une borne (a) de la résistance 20 est connectée au potentiel de masse tandis que l'autre borne (b) est connectée à une borne du supercondensateur 18. L'autre borne (c) du supercondensateur 18 est connectée, via un contact mobile 22 d'un commutateur 24 tel qu'un relais, soit à la borne positive de la batterie 10 dans la position CHA (charge) soit au point (a) de la résistance 20 dans la position DEC (décharge).

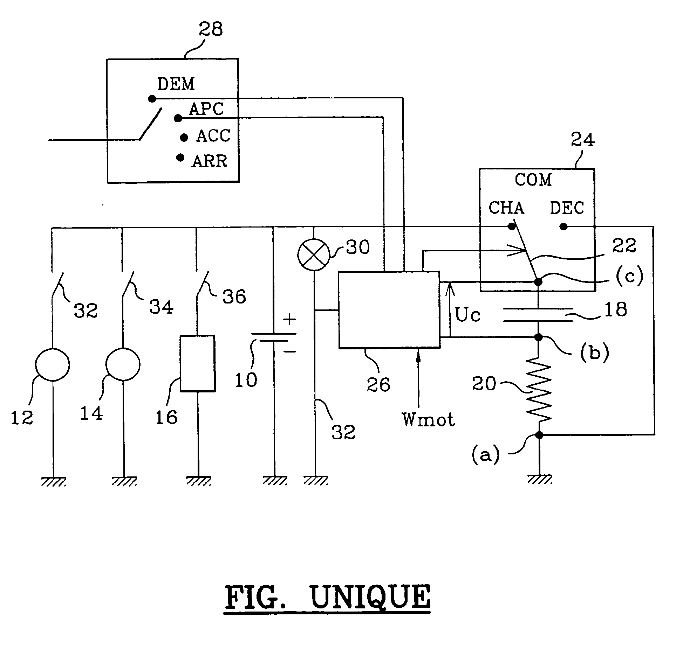

Le contact mobile 22 du commutateur 24 peut avoir soit deux positions CHA et DEC indiquées ci-dessus en relation avec la figure 1, soit trois positions incluant, outre les positions CHA et DEC, une position intermédiaire COM dans laquelle le point (c) n'est pas connecté.

Le commutateur 24 est commandé en position par un dispositif électronique de commande 26 qui détermine la position du contact mobile 22 en fonction de plusieurs paramètres. Ces paramètres sont par exemple :
- la position de la clé dans le barillet d'une serrure 28 et, plus particulièrement la position APC dite "Après Contact" et la position DEM dite de "démarrage du moteur",
- l'information Wmot que le moteur tourne,
- la valeur Uc de la tension mesurée entre les bornes (b) et (c) du supercondensateur 18,
- une tension de seuil limite basse Usl en-dessous de laquelle le supercondensateur 18 est considéré comme déchargé,
- une tension de seuil limite haute Us au-dessus de laquelle le supercondensateur 18 est considéré comme chargé,
- une tension de seuil limite maximum Ush au-dessus de laquelle le supercondensateur est considéré comme chargé au maximum,
- une tension de seuil intermédiaire Usinter au-dessous de laquelle le supercondensateur est considéré comme suffisamment chargé pour que la décharge qui suive assure la mission recherchée,
- la valeur Ures de la tension mesurée entre les bornes du réseau électrique du véhicule,
- une tension de seuil limite Udev (12,5 V par exemple) au-dessous de laquelle le supercondensateur ne doit pas être rechargé pour ne pas surcharger le réseau électrique en "dévers",
- une tension de seuil limite de charge Ucharge (13,5 V par exemple) au-dessus de laquelle le supercondensateur peut être rechargé car le réseau électrique n'est pas en dévers,
- la température T de l'élément à chauffer 20 qui est associé au supercondensateur, et
- une température de consigne Tcons au-delà de laquelle il est inutile de continuer à chauffer l'élément 20 associé au supercondensateur,
- les caractéristiques du supercondensateur.

D'autres paramètres peuvent être envisagés sans sortir du cadre de la présente invention, telle qu'une durée de temporisation de fonctionnement de l'élément à chauffer.

Il est à noter que le barillet de la serrure 28 comprend deux autres positions ou plots ACC pour Accessoires et ARR pour Arrêt qui ne sont pas utilisées en tant qu'informations par le dispositif de commande 26 et ne sont donc pas connectées à des bornes d'entrée de ce dispositif.

Une lampe 30 est connectée aux bornes de la batterie d'accumulateurs 10 par l'intermédiaire du dispositif électronique de commande 26.

Le fonctionnement du dispositif selon l'invention qui vient d'être décrit est différent selon que le commutateur 24 est à deux positions (solution 1) ou à trois positions (solution 2) et à chaque solution correspond un dispositif électronique de commande particulier 26.

### SOLUTION 1

La position de départ est celle où le supercondensateur 18 est déchargé. Le supercondensateur est alors chargé avant la phase de démarrage en l'alimentant par l'intermédiaire de la résistance 20 (position CHA). Pendant la phase de démarrage, le supercondensateur est déchargé (position DEC) dans la résistance 20 sans participation de la batterie. Cette décharge est poursuivie pendant la phase de roulage. Si, à la fin de cette décharge du supercondensateur, le chauffage n'est pas suffisant, un autre cycle de charge et décharge peut être mis en oeuvre en veillant à ce que la dernière opération soit une décharge du supercondensateur.

Pour obtenir ce type de fonctionnement, le dispositif de commande 26 doit comprendre des circuits logiques qui réalisent des fonctions logiques dont les tables de vérité simplifiées sont données par les tableaux I et II. Ces fonctions logiques peuvent aussi être obtenues par un micro-processeur convenablement programmé en utilisant ces tables de vérité I et II.

Dans ces tables de vérité I et II, ainsi que les suivantes, III, IV, V et VI pour la SOLUTION 2, le chiffre 1 indique que la condition en tête de colonne est remplie, le chiffre 0 indiquant alors que la condition n'est pas remplie. La lettre X signifie que la condition peut être remplie ou non tandis que la lettre Y signifie que la condition n'est pas prise en compte par exemple parce que la réalisation d'une autre condition implique que la condition notée Y est également réalisée.

A l'arrêt du véhicule, la clé est sur la position ARR ou ACC et la position du commutateur est sur DEC pour assurer la décharge complète du supercondensateur 18.

Le véhicule restant à l'arrêt, le conducteur met la clé sur la position APC pour préparer le système à une phase de démarrage. Le dispositif 26 met le commutateur 24 en position CHA, ce qui correspond à la première ligne du tableau I, tant que T < Tcons. Dès que T > Tcons ou que Uc > Us (lignes 1 et 2 du tableau II), la lampe 30 s'allume pour avertir le conducteur que le véhicule est prêt à commencer la phase de démarrage.

Il est à noter qu'un fonctionnement inverse de la lampe 30 peut être retenu de manière à allumer la lampe 30 pendant la phase APC et à l'éteindre dès que la condition T > Tcons ou Uc > Us est remplie.

Dans la position CHA, le supercondensateur 18 se charge par un courant I au travers de la résistance 20. Dès que Uc > Us (ligne 1 du tableau II), la lampe 30 s'allume qui indique que le véhicule est prêt à commencer la phase de démarrage.

Dès que la clé 28 est en position DEM (DEM = 1), le dispositif 26 met le commutateur 24 en position DEC (position de repos), ce qui provoque la décharge du supercondensateur dans la résistance 20, et impose cette position tant que DEM = 1.

Dès que le moteur tourne (Wmot = 1), la clé revient sur la position APC. Dans le cas où la phase de démarrage a échoué, le conducteur repasse obligatoirement en position ARR pour réinitialiser le système.

Dans le cas où le démarrage a réussi (Wmot = 1), le commutateur 24 est mis en position CHA lorsque les conditions des lignes 2, 3 et 4 du tableau I sont remplies.

Les conditions de la ligne 2 du tableau I sont remplies si :
- T < Tcons,
- la position antérieure du commutateur était une charge (DEC = 0),
- Ures > Udev,
- Uc < Usinter, ce qui implique a fortiori Uc < Us.

Les conditions de la ligne 3 du tableau I sont remplies si :
- Uc < Us,
- T < Tcons,
- la position antérieure du commutateur était une charge (DEC = 0)
- Ures > Ucharge, ce qui implique que la condition Ures < Udev n'est pas à tester,
- Uc > Usinter, ce qui implique que la condition Uc < Usl est remplie et n'est donc pas à tester.

Les conditions de la ligne 4 du tableau I sont remplies si :
- T < Tcons,
- la position antérieure du commutateur était une décharge (DEC = 0),
- Ures > Ucharge, ce qui implique que la condition Ures < Udev n'est pas à tester,
- Uc < Usinter, ce qui implique que la condition Uc < Us est remplie et n'est donc pas à tester.

### SOLUTION 2

La position de départ est celle où le supercondensateur 18 est chargé. Le supercondensateur est alors déchargé (position DEC) pendant la phase de démarrage dans la résistance 20. Après la phase de démarrage pendant laquelle une grande partie de l'énergie contenue dans le supercondensateur 18 a été utilisée, ce dernier est rechargé en l'alimentant par la batterie d'accumulateurs via la résistance 20, ce qui permet de limiter le courant de charge tout en continuant à alimenter la résistance 20.

La cycle décharge/charge peut se répéter autant de fois que nécessaire pendant la phase roulage. Le nombre de cycles dépend de la capacité du supercondensateur 18, de la tension Ures aux bornes du réseau électrique de bord de manière à ne pas rester en charge lorsque le réseau électrique de bord est en dévers, la durée de la puissance requise pour chauffer la résistance 20 et la température mesurée T sur la résistance 20 ou à son voisinage.

Dans tous les cas, la dernière opération doit être une charge du supercondensateur 20.

Si le supercondensateur 18 n'a pas pu être chargé lors d'un fonctionnement extérieur du véhicule ou s'il s'est déchargé suite à un arrêt prolongé du véhicule, la charge devra être complété avant la phase de démarrage comme dans la SOLUTION 1.

A l'arrêt du véhicule, la clé est sur la position ARR ou ACC et le commutateur 24 est sur la position COM de manière à garder le supercondensateur 18 chargé à sa valeur maximale et à ne pas pénaliser le réseau de bord du courant de fuite du supercondensateur.

Le véhicule étant à l'arrêt, le conducteur met la clé en position APC pour préparer le système à une phase de démarrage.

Le dispositif de commande 26 va mettre alors le commutateur en position CHA si (ligne 1 du tableau IV):
- T < Tcons,
- Uc < Us,
- Ures < Ucharge.

Il est à noter que si T > Tcons (ligne 2 du tableau VI) ou si Uc > Us (ligne 1 du tableau VI), la lampe 30 s'allume pour avertir le conducteur que le véhicule est prêt à commencer la phase de démarrage.

Le conducteur met alors la clé en position DEM (DEM = 1), ce qui conduit à mettre le commutateur en position DEC si (lignes 1 et 2 du tableau V) :
- T < Tcons,
- Ures < Ucharge.

Dès que le moteur tourne (Wmot = 1), la clé est en position ACC ou APC. Après la phase de démarrage, la clé revient en position APC. Dans le cas où le démarrage du moteur a échoué, le conducteur passe obligatoirement la clé en position ARR pour réinitialiser le système.

Le commutateur est mi en position DEC si :
- Uc > Usl et T < Tcons,
et si les autres conditions alternatives suivantes sont remplies :
- Uc > Ush et Ures > Ucharge (ligne 3 - tableau V),
- ou Uc < Ush et Ures > Ucharge et que la position antérieure était DEC ou COM (ligne 4 - tableau V),
- ou Uc > Us, Ures > Udev et Ures < Ucharge (ligne 5 - tableau V),
- ou Uc < Us, Ures > Udev, Ures < Ucharge et la position antérieure était DEC ou COM (ligne 6 - tableau V),
- ou Uc > Ush et Ures < Udev (ligne 7 - tableau V),
- ou Uc < Ush et Ures < Udev (ligne 8 - tableau V).

Le commutateur est mis en position CHA si :
- Uc < Ush, Ures > Ucharge et T > Tcons (ligne 2 du tableau IV),
- ou Uc < Ush, Ures > Ucharge, T < Tcons et la position antérieure était CHA (ligne 3 du tableau IV),
- ou Uc < Usl et Ures > Ucharge (ligne 4 du tableau IV),
- ou Uc < Us, Ures > Udev, Ures < Ucharge et la position antérieure était CHA (ligne 5 du tableau IV).

Le commutateur est mis en position COM si :
- Uc > Ush et T > Tcons (ligne 4 du tableau III),
- ou Uc < Ush, Ures > Udev, Ures < Ucharge, T > Tcons et la position antérieure était DEC ou COM (ligne 5 du tableau III),
- ou Uc < Usl, Ures > Udev, Ures < Ucharge, T < Tcons et la position antérieure était DEC ou COM (ligne 6 du tableau III),
- ou Uc < Ush, Ures < Udev et T > Tcons (ligne 7 du tableau III),
- ou Uc < Usl et Ures < Udev (ligne 8 du tableau III).

Les deux systèmes ou dispositifs qui viennent d'être décrits présentent les avantages suivants :
- l'alimentation de la résistance 20 dès la charge ou la recharge du supercondensateur 18,
- la limitation des courants de recharge du supercondensateur, ce qui préserve la tension Ures du réseau de bord,
- la diminution du volume du supercondensateur 18 du fait des cycles successifs charge/décharge,
- l'alimentation de la résistance 20 dès la phase de démarrage sans participation de la batterie.

**TABLEAU I**

| SOLUTION 1 | | | | | | | | | | | |
|---|---|---|---|---|---|---|---|---|---|---|---|
| Table de vérité simplifiée de la commande du commutateur | | | | | | | | | | | |
| Wmot | APC | DEM | Uc<Us | T<Tcons | Uc<Usl | POS ant DEC | Ures<Udev | Ures<Ucharge | Uc<Usinter | REL | Lam |
| 0 | 1 | 0 | X | 1 | X | X | X | X | X | CHA | ON |
| 1 | Y | Y | Y | 1 | X | 0 | 0 | X | 1 | CHA | OFF |
| 1 | Y | Y | 1 | 1 | Y | 0 | Y | 0 | 0 | CHA | OFF |
| 1 | Y | Y | Y | 1 | X | 1 | Y | 0 | 1 | CHA | OFF |

**TABLEAU II**

| SOLUTION 1 | | | | | | | | | | |
|---|---|---|---|---|---|---|---|---|---|---|
| Table de vérité simplifiée de la commande lampe 30 | | | | | | | | | | |
| Wmot | APC | DEM | Uc<Us | T<Tcons | Uc<Usl | POS ant DEC | Ures<Udev | Ures<Ucharge | Uc<Usinter | Lampe |
| 0 | 1 | 0 | 0 | X | X | X | X | X | X | ON |
| 0 | 1 | 0 | X | 0 | X | X | X | X | X | ON |

**TABLEAU III**

| SOLUTION 2 | | | | | | | | | | |
|---|---|---|---|---|---|---|---|---|---|---|
| Table de vérité simplifiée pour la position COM | | | | | | | | | | |
| Wmot | APC | DEM | Uc<Usl | Uc<Us | Uc<Ush | Ures<Udev | Ures<Ucharge | T<Tcons | Pos. ant. DEC/COM | RELAIS |
| X | 0 | X | X | X | X | X | X | X | X | COM |
| 0 | 1 | 0 | Y | 0 | X | X | X | X | X | COM |
| 0 | X | X | X | X | X | X | X | 0 | X | COM |
| 1 | Y | Y | Y | 0 | 0 | X | X | 0 | X | COM |
| 1 | Y | Y | X | X | 1 | 0 | 1 | 0 | 1 ou COM | COM |
| 1 | Y | Y | 1 | Y | Y | 0 | 1 | 1 | 1 ou COM | COM |
| 1 | Y | Y | X | X | 1 | 1 | Y | 0 | X | COM |
| 1 | Y | Y | 1 | Y | Y | 1 | Y | X | X | COM |

**TABLEAU IV**

| SOLUTION 2 | | | | | | | | | | |
|---|---|---|---|---|---|---|---|---|---|---|
| Table de vérité simplifiée pour la position charge CHA | | | | | | | | | | |
| Wmot | APC | DEM | Uc<Usl | Uc<Us | Uc<Ush | Ures<Udev | Ures<Ucharge | T<Tcons | Pos. ant. DEC/COM | RELAIS |
| 0 | 1 | 0 | X | 1 | Y | X | 1 | 1 | X | CHA |
| 1 | Y | Y | X | X | 1 | Y | 0 | 0 | X | CHA |
| 1 | Y | Y | X | X | 1 | Y | 0 | 1 | 0 | CHA |
| 1 | Y | Y | 1 | Y | Y | Y | 0 | X | X | CHA |
| 1 | Y | Y | X | 1 | Y | 0 | 1 | X | 0 | CHA |

**TABLEAU V**

| SOLUTION 2 | | | | | | | | | | |
|---|---|---|---|---|---|---|---|---|---|---|
| Table de vérité simplifiée pour la position décharge DEC | | | | | | | | | | |
| Wmot | APC | DEM | Uc<Usl | Uc<Us | Uc<Ush | Ures<Udev | Ures<Ucharge | T<Tcons | Pos. ant. DEC/COM | RELAIS |
| 0 | 1 | 1 | Y | 0 | X | X | 1 | 1 | X | DEC |
| 0 | 1 | 1 | X | 1 | Y | X | 1 | 1 | X | DEC |
| 1 | Y | Y | Y | Y | 0 | Y | 0 | 1 | X | DEC |
| 1 | Y | Y | 0 | X | 1 | Y | 0 | 1 | 1 ou COM | DEC |
| 1 | Y | Y | 0 | 0 | X | 0 | 1 | 1 | X | DEC |
| 1 | Y | Y | 0 | 1 | Y | 0 | 1 | 1 | 1 ou COM | DEC |
| 1 | Y | Y | Y | Y | 0 | 1 | Y | 1 | X | DEC |
| 1 | Y | Y | 0 | X | 1 | 1 | Y | 1 | X | DEC |

**TABLEAU VI**

| SOLUTION 2 | | | | | | | | | | |
|---|---|---|---|---|---|---|---|---|---|---|
| Table de vérité simplifiée de la commande de la lampe 30 | | | | | | | | | | |
| Wmot | APC | DEM | Uc<Usl | Uc<Us | Uc<Ush | Ures<Udev | Ures<Ucharge | T<Tcons | Pos.ant. DEC/COM | Lampe |
| 0 | 1 | 0 | 0 | 0 | X | X | X | X | X | ON |
| 0 | 1 | 0 | X | X | X | X | X | 0 | X | ON |

## Revendications

1. - Dispositif d'alimentation électrique d'un véhicule automobile comprenant:
- une batterie d'accumulateurs (10),
- des moyens (12) pour charger ladite batterie d'accumulateurs (10),
- des résistances de chauffage (16, 20),
- un dispositif de commande manuelle (28) du type serrure pour clé de contact, et
- un supercondensateur (18),
**caractérisé en ce que** :
- une borne (b) dudit supercondensateur (18) est connectée à une borne d'au moins une résistance de chauffage (20),
- un commutateur (24), à au moins deux positions (CHA, DEC), connecte l'autre borne (c) dudit supercondensateur (18) soit à la batterie d'accumulateurs (10), soit à l'autre borne de la résistance de chauffage (20), et
- un circuit logique (26) commande la position dudit commutateur (24) en fonction de la position du dispositif de commande manuelle (28) et des valeurs mesurées de certains paramètres électriques du dispositif d'alimentation électrique.

2. - Dispositif selon la revendication 1, **caractérisé en ce que** ledit commutateur (24) est à trois positions,
- une première position (CHA) pour connecter l'autre borne (c) du supercondensateur (18) à la batterie d'accumulateurs (10),
- une deuxième position (DEC) pour connecter l'autre borne (c) du supercondensateur (18) à l'autre borne de la résistance de chauffage (20), et
- une troisième position intermédiaire (COM) dans laquelle l'autre borne (c) du supercondensateur (18) n'est connectée à aucun élément du dispositif.

3. - Dispositif selon la revendication 1 ou 2, **caractérisé en ce que** le circuit logique (26) est un micro-processeur convenablement programmé.

## Claims

1. Electric power supply device for a motor vehicle comprising:
- a storage battery (10);
- means (12) of charging said storage battery (10);
- heating resistors (16, 20);
- a manual control device (28) in the form of a lock for the ignition key; and
- a supercapacitor (18);
**characterized in that**:
- a terminal (b) of said supercapacitor (18) is connected to a terminal of at least one heating resistor (20);
- a switch (24), with at least two positions (CHA, DEC), connects the other terminal (c) of said supercapacitor (18) either to the storage battery (10) or to the other terminal of the heating resistor (20); and
- a logic circuit (26) controls the position of said switch (24) depending on the position of the manual control device (28) and on the measured values of certain electrical parameters of the electric power supply device.

2. Device according to Claim 1, **characterized in that** said switch (24) has three positions:
- a,first position (CHA) for connecting the other terminal (c) of the supercapacitor (18) to the storage battery (10);
- a second position (DEC) for connecting the other terminal (c) of the supercapacitor (18) to the other terminal of the heating resistor (20); and
- a third position (COM) in which the other terminal (c) of the supercapacitor (18) is not connected to any element of the device.

3. Device according to Claim 1 or 2, **characterized in that** the logic circuit (26) is a suitably programmed microprocessor.

## Patentansprüche

1. Vorrichtung für die elektrische Versorgung eines Kraftfahrzeugs, mit:
- einer Akkumulatorbatterie (10),
- Mitteln (12) zum Aufladen der Akkumulatorbatterie (10),
- Heizwiderständen (16, 20),
- einer manuellen Steuervorrichtung (28) des Typs Zündschlüssel-Schloss und
- einem superkondensator (18),
**dadurch gekennzeichnet, dass**:
- ein Anschluss (b) des Superkondensators (18) mit einem Anschluss wenigstens eines Heizwiderstands (20) verbunden ist,
- ein Umschalter (24) mit wenigstens zwei Stellungen (CHA, DEC) den anderen Anschluss (c) des Superkondensators (18) entweder mit der Akkumulatorbatterie (10) oder mit dem anderen Anschluss des Heizwiderstands (20) verbindet und
- eine Logikschaltung (26) die Stellung des Umschalters (24) in Abhängigkeit von der Position der manuellen Steuervorrichtung (28) und von Messwerten bestimmter elektrischer Parameter der elektrischen Versorgungsvorrichtung steuert.

2. Vorrichtung nach Anspruch 1, **dadurch gekennzeichnet, dass** der Umschalter (24) drei Stellungen besitzt,
- eine erste Stellung (CHA), um den anderen Anschluss (c) des Superkondensators (18) mit der Akkumulatorbatterie (10) zu verbinden,
- eine zweite Stellung (DEC), um den anderen Anschluss (c) des Superkondensators (18) mit dem anderen Anschluss des Heizwiderstands (20) zu verbinden, und
- eine dritte Zwischenstellung (COM), in der der andere Anschluss (c) des Superkondensators (18) mit keinem Element der Vorrichtung verbunden ist.

3. Vorrichtung nach Anspruch 1 oder 2, **dadurch gekennzeichnet, dass** die Lagikschaltung (26) ein geeignet programmierter Mikroprozessor ist.
